Europäisches Patentamt

European Patent Office

Office européen des brevets

(11) Publication number: **0 307 043 B1**

# EUROPEAN PATENT SPECIFICATION

(45) Date of publication of patent specification: **22.01.92**

(51) Int. Cl.⁵: **C08J 9/12**, C08J 9/30, E04D 7/00

(21) Application number: **88201893.0**

(22) Date of filing: **05.09.88**

(54) **Process for the application of a roof cladding.**

(30) Priority: **09.09.87 NL 8702139**

(43) Date of publication of application:
**15.03.89 Bulletin 89/11**

(45) Publication of the grant of the patent:
**22.01.92 Bulletin 92/04**

(84) Designated Contracting States:
**AT BE CH DE ES FR GB GR IT LI NL SE**

(56) References cited:
**EP-A- 0 031 977**
**DE-A- 1 247 648**
**GB-A- 2 102 809**

(73) Proprietor: **DSM N.V.**
**Het Overloon 1**
**NL-6411 TE Heerlen(NL)**

(72) Inventor: **Visser, Cornelis**
**Zekkenstraat 2729**
**NL-3151 XN Hoek van Holland(NL)**
Inventor: **Van Meerten, Eric**
**Okkernootstraat 180**
**NL-2555 ZL Den Haag(NL)**

(74) Representative: **Hoogstraten, Willem Cornelis**
**Roeland et al**
**OCTROOIBUREAU DSM Postbus 9**
**NL-6160 MA Geleen(NL)**

Rank Xerox (UK) Business Services

## Description

The invention relates to a process for the preparation of a roof cladding, in situ, more in particular for a cladding on a roof with an irregular surface.

Roof claddings are known to age because of harsh outdoor conditions. So, every 10-40 years existing claddings of e.g. zinc or bitumen with coarse gravel have to be renewed. Before a new roof cladding can be applied, the old cladding generally is removed, in order to get an even surface. A regular surface is necessary especially, if a roof cladding of a flexible polyester or zinc is to be applied. However, cleaning of an old roof is very expensive and time consuming.

The invention provides a solution to this problem.

The process for application of a roof cladding according to the invention is characterised by applying 0.1 to 5 cm polyester foam by mixing a composition capable of setting, on the basis of an unsaturated polyester and a monomer containing an ethylenic unsaturation, with a gas to obtain a foam, the foam is applied in situ on a roof with an irregular surface and allowing this foam to set, the foam volume being the same both in the, eventually smoothed, liquid phase and the set phase, and applying a polyester top layer on top of the foam.

Polyester foam is applied in insulation and other sheet material, such as described, for instance, in GB-A-2102809. The sheets are usually made in a factory. As foaming agent usually a blowing agent such as freon, or simply nitrogen, is applied, although air as blowing agent is mentioned too.

By preference, air is used as a gas because then, the blowing agent can be compressed in situ, and no bottles with blowing agent are to be supplied. Air can be used at a pressure between 30 and 200 bar.

By preference the composition is mixed in spraying head with an initiator/accelerator system at a pressure between 50-100 bar, following which the foam is allowed to set at a temperature above 5¤C. By preference the foam is allowed to set at between 5 and 40¤C, more in particular at room temperature.

It is unexpected that the radical polymerization, which is inhibited by oxygen, should appear to proceed successfully.

It is a great advantage of the invention that the foam volume is the same both in the liquid and in the set phase. This implies that no expansion takes place during setting, so that the foam can be smoothed in the liquid phase. As a result, it is easy to obtain a smooth foam layer on an irregular surface.

The process according to the invention is eminently suitable for in situ application of polyester foam, for instance for roof levelling or for filling up cracks and holes in buildings.

Another advantage is lain in the fact, that polyester foams are known to be heat- and noise insulators. So the process of the invention can also be applied with preference on a roof with a slightly irregular surface, and applying a layer with a thickness of at least 2 cm, in order to get good insulating properties.

As polyester resin the usual unsaturated polyesters are eligible, and as monomer containing an ethylenic unsaturation notably vinylaromatic monomers such as styrene, $\alpha$-methyl styrene, p-methyl styrene and vinyl toluene are eligible. By preference a mixture of styrene and $\alpha$-methyl styrene is used to depress the peak temperature.

By preference also an agent influencing the thixotropy is applied in the composition, for instance silica Aerosil®. Aerosil® is preferably applied in amounts of between 1 and 3 wt. %, for then the foam does not or hardly sag out on sloping surfaces.

If desirable, fillers can be applied. By preference, light-weight fillers such as Q-Cel®, Fillite® and Expancel® are used to keep the weight, for instance on roofs, as low as possible.

By preference, initiators are used that initiate the reaction at room temperature, and these are preferably used in combination with accelerators.

The foam usually has a specific weight between 500 and 700 kg/m$^3$, depending on the amount of air introduced in the mixture and on the fillers used.

A roof cladding of a polyester top layer is e.g. described in EP-B-31977 or DE-C-2404781.

## Example

On top of a layer of concrete with bitumen and gravel a layer of polyester foam of 1-3 cm thickness was applied.

With 2 wt.% benzoyl peroxide powder (50%) as initiator and 0.15 wt.% dimethyl para-toluidine and 0.2 dimethyl aniline as accelerators, the composition containing unsaturated polyester was mixed with air in a spraying head (1 m$^3$ air per m$^3$ polyester composition). The polyester composition comprised:

- 69 parts by weight of unsaturated polyester resin on the basis of 543 parts by weight of propylene glycol, 75 parts by weight of diethylene glycol, 727 parts by weight of phthalic anhydride and 240 parts by weight of maleic anhydride;
- 41 parts by weight of styrene
- 3 parts by weight of -methyl styrene
- 2 parts by weight of Aerosil®

- 1 part by weight of monotertiary butylquinone
- 1 part by weight of foam stabilizer (Tegostab B8404®).

After setting, a top layer of Triflex, flexible unsaturated polyester, was applied, so that a weatherproof roof cladding was obtained.

## Claims

1. Process for application of a roof cladding, characterised in that, 0.1 to 5 cm polyester foam is applied by mixing a composition capable of setting, on the basis of an unsaturated polyester and a monomer containing an ethylenic unsaturation, with a gas to obtain a foam, the foam is applied in situ on a roof with an irregular surface and this foam is allowed to set, the foam volume being the same both in the, eventually smoothed, liquid phase and the set phase and that a polyester top layer is applied on top of the foam.

2. Process according to claim 1, characterized in that, as gas use is made of air at a pressure between 30 and 200 bar.

3. Process according any one of claims 1-2, characterized in that the composition containing unsaturated polyester, together with an initiator and an accelerator, is mixed with air in a spraying head at a pressure between 50 and 100 bar.

4. Process according to any one of claims 1-3, characterized in that the foam is allowed to set at a temperature between 5 and 40¤C.

5. Process according to any one of claims 1-4, characterized in that the composition containing unsaturated polyester comprises styrene, α-methyl styrene and an additive influencing the thixotropy.

## Revendications

1. Procédé d'application d'un revêtement de toiture, caractérisé par le fait que l'on applique 0,1 à 5cm de mousse de polyester en mélangeant une composition capable de faire prise, sur la base d'un polyester non saturé et d'un monomère contenant une liaison non saturée de type éthylénique, avec un gaz pour obtenir une mousse, que l'on applique la mousse sur chantier sur une couverture de surface irrégulière et qu'on laisse cette mousse faire prise, le volume de mousse étant le même en phase liquide, éventuellement lissée et en phase solide, et que l'on applique une couche supérieure de polyester au-dessus de la mousse.

2. Procédé selon la revendication 1, caractérisé par le fait que, comme gaz, on utilise de l'air sous une pression comprise entre 30 et 200 bars.

3. Procédé selon l'une quelconque des revendications 1-2, caractérisé par le fait que l'on mélange la composition contenant le polyester insaturé, ainsi qu'un agent d'amorçage et un accélérateur, avec de l'air dans la tête de pulvérisation sous une pression comprise entre 50 et 100 bars.

4. Procédé selon l'une quelconque des revendications 1-3, caractérisé par le fait qu'on laisse la mousse faire prise à une température comprise entre 5 et 40°C.

5. Procédé selon l'une quelconque des revendications 1-4, caractérisé par le fait que la composition contenant le polyester insaturé est constituée de styrène, α-méthylstyrène et d'un additif influençant la thixotropie.

## Patentansprüche

1. Verfahren zum Aufbringen einer Dachdeckung, dadurch gekennzeichnet, daß 0,1 bis 5 cm Polyesterschaum aufgebracht wird, indem eine erhärtungsfähige Zusammensetzung auf Basis eines ungesättigten Polyesters und eines eine äthylenische Unsättigung enthaltenden Monomers mit einem Gas gemischt wird, um einen Schaum zu erhalten, der Schaum in situ auf ein Dach mit einer ungleichmäßigen Oberfläche aufgebracht wird und dieser Schaum erhärten gelassen wird, wobei das Schaumvolumen in der, gegebenenfalls geglätteten, flüssigen Phase und in der erhärteten Phase gleich ist, und daß eine Polyesterdeckschicht auf die Oberseite des Schaumes aufgebracht wird.

2. Verfahren nach Anspruch 1, dadurch gekennzeichnet, daß als Gas Luft mit einem Druck zwischen 30 und 200 bar verwendet wird.

3. Verfahren nach einem der Ansprüche 1 - 2, dadurch gekennzeichnet, daß die ungesättigten Polyester zusammen mit einem Starter und einem Beschleuniger enthaltende Zusammensetzung mit Luft in einem Sprühkopf bei einem Druck zwischen 50 und 100 bar gemischt wird.

4. Verfahren nach einem der Ansprüche 1-3, dadurch gekennzeichnet, daß der Schaum bei einer Temperatur zwischen 5 und 40°C erhärten gelassen wird.

5. Verfahren nach einem der Ansprüche 1-4, dadurch gekennzeichnet, daß die ungesättigten Polyester enthaltende Zusammensetzung Styrol, $\alpha$-Methylstyrol und einen die Thixotropie beeinflussenden Zusatz enthält.